# EUROPEAN PATENT APPLICATION

(11) **EP 4 779 764 A1**
(43) Date of publication of application: **22.07.2026**
(21) Application number: 26151696.7
(22) Date of filing: 13.01.2026
(51) Int. Cl.: H01M 50/103, H01M 50/15, H01M 50/176, H01M 50/528, H01M 50/533, H01M 50/553, H01M 50/55

(54) **BATTERY CELL**

(30) Priority: 15.01.2025 KR 20250006225; 16.07.2025 KR 20250096182
(71) Applicant: SK On Co., Ltd., Seoul 03161 (KR)
(72) Inventor: KWAK, Seung Ho, 34124 Daejeon (KR); PARK, Soo Min, 34124 Daejeon (KR)
(74) Representative: Prüfer & Partner mbB Patentanwälte · Rechtsanwälte

(57) **Abstract**

The battery cell may include: a first electrode assembly including a first terminal tab protruding in a first direction; a second electrode assembly which is adjacent to the first electrode assembly in a second direction intersecting the first direction, and includes a second terminal tab protruding in the first direction; a case defining a receiving space that receives the first electrode assembly and the second electrode assembly, and including an opening that is in communication with the receiving space and is opened in a third direction perpendicular to each of the first direction and the second direction; and a cap assembly covering at least a portion of the opening.

## Description

### BACKGROUND OF THE INVENTION

### 1. Field

The present disclosure relates to a battery cell.

### 2. Description of the Related Art

A battery cell may convert chemical energy into electrical energy by using an oxidation-reduction reaction. Such a battery cell may be used for manufacturing a battery pack. For example, the battery pack may include a plurality of battery cells. The battery cell (or the battery pack including the same) may be used as a power source of various devices (e.g., an electronic device, an electric vehicle, and/or an energy storage system).

### SUMMARY OF THE INVENTION

According to an aspect of the present disclosure, a battery cell with improved reliability may be provided.

Meanwhile, the present disclosure may be widely applied to green technology fields such as an electric vehicle, a battery charging station, an energy storage system (ESS), and photovoltaics and wind power that use a battery. In addition, the present disclosure may be used for eco-friendly mobility including an electric vehicle and a hybrid vehicle to prevent climate change by suppressing air pollution and greenhouse gas emissions.

As a technical means to achieve the technical objects, a battery cell according to the present disclosure may include: a first electrode assembly including a first terminal tab protruding in a first direction; a second electrode assembly which is adjacent to the first electrode assembly in a second direction intersecting the first direction, and includes a second terminal tab protruding in the first direction; a case defining a receiving space that receives the first electrode assembly and the second electrode assembly, and including an opening that is in communication with the receiving space and is opened in a third direction perpendicular to each of the first direction and the second direction; and a cap assembly covering at least a portion of the opening. The cap assembly may include a first current collecting portion at least a portion of which is disposed between the first terminal tab and the second terminal tab. The first terminal tab and the second terminal tab may be bent toward each other and may be electrically coupled to the first current collecting portion.

In an embodiment, on a region overlapping the first current collecting portion in the first direction, the first terminal tab and the second terminal tab may be spaced apart from each other.

In an embodiment, the first current collecting portion may include: a first-first portion disposed on the first electrode assembly and the second electrode assembly; and a first-second portion extending from the first-first portion in a direction opposite to the third direction. At least a portion of the first-second portion may be disposed between the first terminal tab and the second terminal tab.

In an embodiment, between the first terminal tab and the second terminal tab, a width of the first-second portion in the second direction may be greater than a shortest spaced distance in the second direction between the first terminal tab and the second terminal tab.

In an embodiment, in a first overlapping region in which each of the first terminal tab and the second terminal tab overlaps the first-second portion in a direction opposite to the first direction, a thickness of the first-second portion in the first direction may be greater than each of a thickness of the first terminal tab in the first direction and a thickness of the second terminal tab in the first direction.

In an embodiment, the first electrode assembly may include a first opposite terminal tab protruding in a direction opposite to the first direction. The second electrode assembly may include a second opposite terminal tab protruding in a direction opposite to the first direction. The cap assembly may include a second current collecting portion at least a portion of which is disposed between the first opposite terminal tab and the second opposite terminal tab. The first opposite terminal tab and the second opposite terminal tab may be bent toward each other and may be electrically coupled to the second current collecting portion.

In an embodiment, the first current collecting portion and the second current collecting portion may be spaced apart from each other.

In an embodiment, on a region overlapping the second current collecting portion in a direction opposite to the first direction, the first opposite terminal tab and the second opposite terminal tab may be spaced apart from each other.

In an embodiment, the second current collecting portion may include: a second-first portion disposed on the first electrode assembly and the second electrode assembly; and a second-second portion extending from the second-first portion in a direction opposite to the third direction. At least a portion of the second-second portion may be disposed between the first opposite terminal tab and the second opposite terminal tab.

In an embodiment, between the first opposite terminal tab and the second opposite terminal tab, a width of the second-second portion in the second direction may be greater than a shortest spaced distance in the second direction between the first opposite terminal tab and the second opposite terminal tab.

In an embodiment, in a second overlapping region in which each of the first opposite terminal tab and the second opposite terminal tab overlaps the second-second portion in the first direction, a thickness of the second-second portion in the first direction may be greater than each of a thickness of the first opposite terminal tab in the first direction and a thickness of the second opposite terminal tab in the first direction.

In an embodiment, the cap assembly may include a first plate covering at least a portion of the first current collecting portion and at least a portion of the second current collecting portion.

In an embodiment, the first plate may include a first hole and a second hole which respectively penetrate the first plate in the third direction and are spaced apart from each other.

The first current collecting portion may include a first protrusion portion protruding in the third direction and inserted into the first hole.

The second current collecting portion may include a second protrusion portion protruding in the third direction and inserted into the second hole.

In an embodiment, the first plate may include a first terminal portion and a second terminal portion which respectively protrude in the third direction and are spaced apart from each other.

In an embodiment, the first current collecting portion may be electrically connected to the first terminal portion. The second current collecting portion may be electrically connected to the second terminal portion.

According to an embodiment of the present disclosure, reliability of the battery cell may be improved.

### BRIEF DESCRIPTION OF THE DRAWINGS

FIG. 1 is an exploded perspective view for explaining a battery cell according to the present disclosure.
FIG. 2 is a view for explaining an electrode assembly included in an electrode assembly array of FIG. 1.
FIG. 3 is an exploded perspective view for explaining a cap assembly included in the battery cell of FIG. 1.
FIG. 4 is a perspective view for explaining a state in which a portion of the first current collecting portion is disposed between the first terminal tab and the second terminal tab.
FIG. 5 is a perspective view for explaining a state in which each of the first terminal tab and the second terminal tab is bent and electrically coupled to the first current collecting portion.
FIG. 6 is a view for explaining the first terminal tab and the second terminal tab electrically coupled to the first current collecting portion.
FIG. 7 is a cross-sectional view taken along line 11-12 of FIG. 6.
FIG. 8 is a perspective view for explaining a state in which a portion of the second current collecting portion is disposed between the first opposite terminal tab and the second opposite terminal tab.
FIG. 9 is a perspective view for explaining a state in which each of the first opposite terminal tab and the second opposite terminal tab is bent and electrically coupled to the second current collecting portion.
FIG. 10 is a view for explaining the first opposite terminal tab and the second opposite terminal tab electrically coupled to the second current collecting portion.
FIG. 11 is a cross-sectional view taken along line I3-I4 of FIG. 10.
FIG. 12 is a view for explaining a method of forming an electrode assembly array.
FIG. 13 is a view for explaining a method of electrically coupling a cap assembly to the electrode assembly array.
FIG. 14 is a view for explaining a method of manufacturing a battery cell using the electrode assembly array to which the cap assembly is coupled.

### DETAILED DESCRIPTION

Hereinafter, the present disclosure will be described in detail with reference to the accompanying drawings. However, this is merely exemplary, and the present disclosure is not limited to the specific embodiments exemplarily described.

In the present disclosure, first to third directions DR1, DR2, DR3 are defined.

The first direction DR1 may be a direction in which terminal tabs TA of the respective electrode assemblies EA protrude. The second direction DR2 may be a direction intersecting (or perpendicular to) the first direction DR1. The second direction DR2 may be a direction in which the electrode assemblies EA are arranged. The third direction DR3 may be a direction intersecting (or perpendicular to) each of the first direction DR1 and the second direction DR2. The third direction DR3 may be a direction opposite to an acting direction of gravity and may also be referred to as a "height direction."

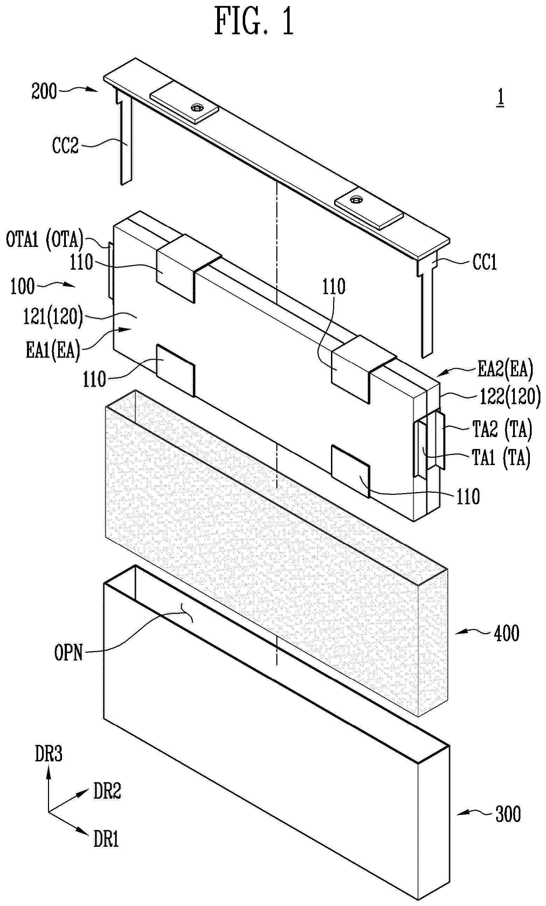

FIG. 1 is an exploded perspective view for explaining a battery cell according to the present disclosure.

Referring to FIG. 1, the battery cell 1 may include an electrode assembly array 100, a cap assembly 200, and a case 300.

The electrode assembly array 100 may include a plurality of electrode assemblies EA. Each of the plurality of electrode assemblies EA may convert chemical energy into electrical energy (or convert electrical energy into chemical energy). Each of the plurality of electrode assemblies EA may be used as a power source of various devices (e.g., an electronic device, an electric vehicle, and/or an energy storage system).

In an embodiment, the electrode assembly array 100 may include a plurality of cover members 120. The plurality of cover members 120 may respectively cover at least a portion of the plurality of electrode assemblies EA. The plurality of cover members 120 may serve to prevent unnecessary electrical short circuits generated when each of the plurality of electrode assemblies EA contacts other components having conductivity. The plurality of cover members 120 may be, for example, of a pouch type, but the present disclosure is not limited thereto. In an embodiment, at least some or all of the plurality of cover members 120 may be omitted.

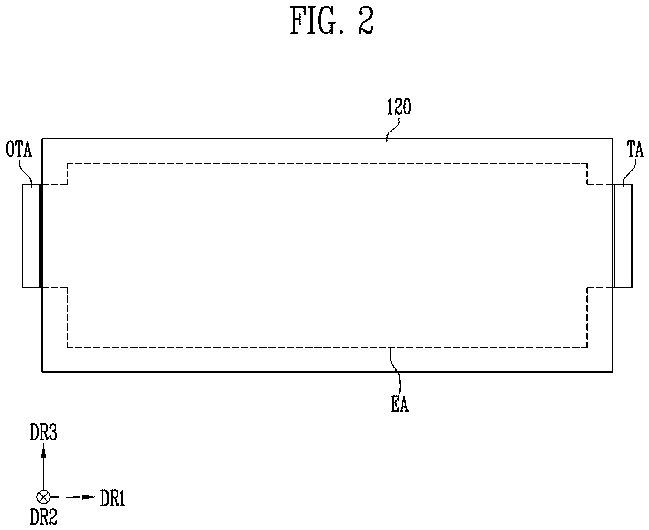

Hereinafter, each of the plurality of electrode assemblies EA will be described with reference to FIG. 2.

FIG. 2 is a view for explaining an electrode assembly included in an electrode assembly array of FIG. 1.

Referring to FIG. 2, the electrode assembly EA may have a wound structure in which a negative electrode, a positive electrode, and a separator are wound. However, the present disclosure is not limited thereto. For example, the electrode assembly may also have a stacking shape, a zigzag-folding shape, or a stack-folding shape.

The electrode assembly EA may include a terminal tab TA and an opposite terminal tab OTA. In an embodiment, first uncoated portions of a first electrode (e.g., a negative electrode) included in the electrode assembly EA may protrude from the cover member 120 and be exposed. The first uncoated portions may be electrically coupled to each other, and such a portion may be the terminal tab TA. Likewise, second uncoated portions of a second electrode (e.g., a positive electrode) included in the electrode assembly EA may protrude from the cover member 120 and be exposed. The second uncoated portions may be electrically coupled to each other, and such a portion may be the opposite terminal tab OTA. In an embodiment, the terminal tab TA and the opposite terminal tab OTA may protrude in directions opposite to each other. For example, the terminal tab TA may protrude in the first direction DR1, and the opposite terminal tab OTA may protrude in a direction opposite to the first direction DR1.

Referring again to FIG. 1, in an embodiment, the plurality of electrode assemblies EA may include a first electrode assembly EA1 and a second electrode assembly EA2 adjacent to the first electrode assembly EA1 in the second direction DR2. In the foregoing embodiment, the plurality of cover members 120 may include a first cover member 121 and a second cover member 122.

The first electrode assembly EA1 may include a first terminal tab TA1 protruding in the first direction DR1. The first electrode assembly EA1 may also include a first opposite terminal tab OTA1 protruding in a direction opposite to the first direction DR1. In this case, the first cover member 121 may cover at least a portion of the first electrode assembly EA1. Each of the first terminal tab TA1 and the first opposite terminal tab OTA1 may protrude from the first cover member 121 and be exposed.

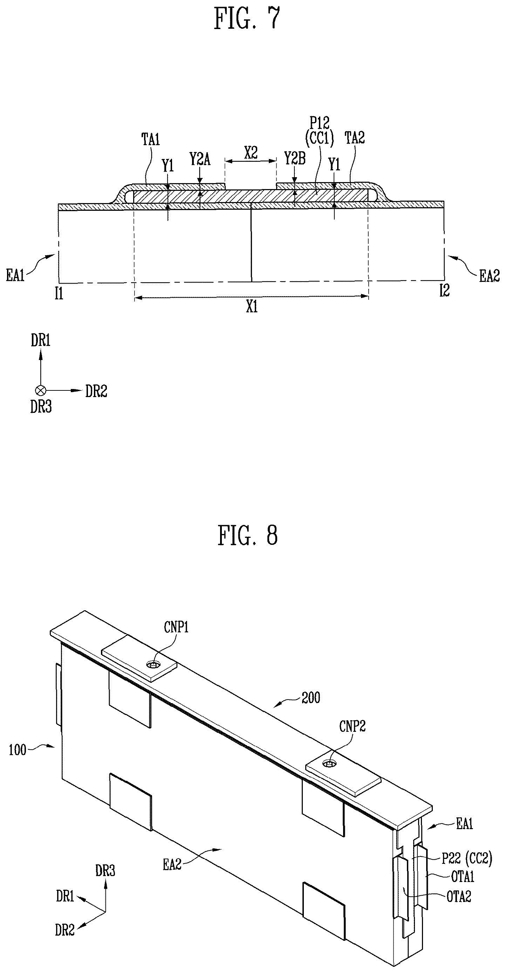

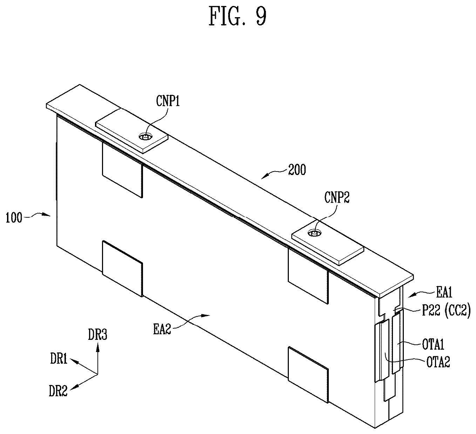

The second electrode assembly EA2 may include a second terminal tab TA2 protruding in the first direction DR1. Although not illustrated in FIG. 1, the second electrode assembly EA2 may include a second opposite terminal tab OTA2 (see FIGS. 8 and 9) protruding in a direction opposite to the first direction DR1. In this case, the second cover member 122 may cover at least a portion of the second electrode assembly EA2. Each of the second terminal tab TA2 and the second opposite terminal tab OTA2 may protrude from the second cover member 122 and be exposed.

The first terminal tab TA1 and the second terminal tab TA2 may be described in the same manner as the terminal tab TA (see FIG. 2). The first opposite terminal tab OTA1 and the second opposite terminal tab OTA2 (see FIGS. 8 and 9) may be described in the same manner as the opposite terminal tab OTA (see FIG. 2). Accordingly, redundant descriptions are omitted.

In an embodiment, the first electrode assembly EA1 and the second electrode assembly EA2 may be coupled to each other. For example, the electrode assembly array 100 may include an insulating tape 110 that couples the first electrode assembly EA1 and the second electrode assembly EA2 to each other. For example, the insulating tape 110 may couple the first cover member 121 covering at least a portion of the first electrode assembly EA1 and the second cover member 122 covering at least a portion of the second electrode assembly EA2 to each other. However, the present disclosure is not limited thereto. In another example, the insulating tape 110 may be omitted, and in such a case, an adhesive member may be disposed between the first electrode assembly EA1 (or the first cover member 121 covering at least a portion thereof) and the second electrode assembly EA2 (or the second cover member 122 covering at least a portion thereof).

The cap assembly 200 may include a first current collecting portion CC1 and a second current collecting portion CC2. The cap assembly 200 may be coupled to the electrode assembly array 100. Specifically, based on the illustration of FIG. 1, the cap assembly 200 may be coupled to the electrode assembly array 100 as the cap assembly 200 moves in a direction opposite to the third direction DR3.

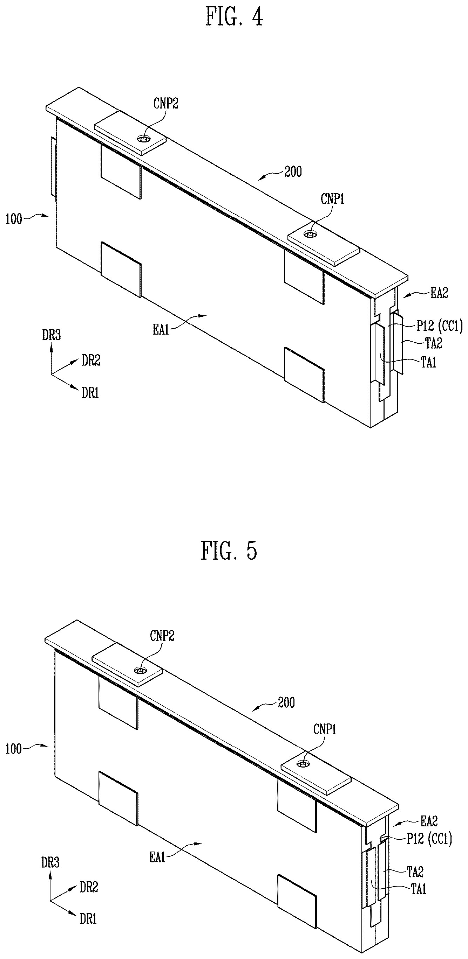

The first current collecting portion CC1 may be electrically coupled to each of the first terminal tab TA1 and the second terminal tab TA2. Specifically, when the cap assembly 200 is coupled to the electrode assembly array 100, at least a portion of the first current collecting portion CC1 may be disposed between the first terminal tab TA1 and the second terminal tab TA2. The first terminal tab TA1 and the second terminal tab TA2 may be bent toward each other and may be electrically coupled to the first current collecting portion CC1. This will be described later with reference to FIGS. 4 to 7.

The second current collecting portion CC2 may be electrically coupled to each of the first opposite terminal tab OTA1 and the second opposite terminal tab OTA2 (see FIGS. 8 and 9). Specifically, when the cap assembly 200 is coupled to the electrode assembly array 100, at least a portion of the second current collecting portion CC2 may be disposed between the first opposite terminal tab OTA1 and the second opposite terminal tab OTA2 (see FIGS. 8 and 9). The first opposite terminal tab OTA1 and the second opposite terminal tab OTA2 may be bent toward each other and may be electrically coupled to the second current collecting portion CC2. This will be described later with reference to FIGS. 8 to 11.

The case 300 may define a receiving space that receives the electrode assembly array 100. The case 300 may include an opening OPN that is in communication with the receiving space and is opened in the third direction DR3. In an embodiment, the electrode assembly array 100 to which the cap assembly 200 is coupled may be received inside the receiving space through the opening OPN. In this case, the cap assembly 200 may cover at least a portion of the opening OPN. In an embodiment, the cap assembly 200 may shield the opening OPN.

In an embodiment, the battery cell 1 may further include an insulating member 400. The insulating member 400 may be received in the receiving space of the case 300. In an embodiment, the insulating member 400 may surround the electrode assembly array 100 to which the cap assembly 200 is coupled in the receiving space. In this case, the insulating member 400 may serve to prevent unnecessary electrical short circuits generated when the electrode assembly array 100 to which the cap assembly 200 is coupled contacts other components having conductivity. In an embodiment, at least a portion or all of the insulating member 400 may be omitted.

As described above, the battery cell 1 of the present disclosure may include: a first electrode assembly EA1 including a first terminal tab TA1 protruding in the first direction DR1; a second electrode assembly EA2 which is adjacent to the first electrode assembly EA1 in the second direction DR2, and includes a second terminal tab TA2 protruding in the first direction DR1; a case 300 defining the receiving space that receives the first electrode assembly EA1 and the second electrode assembly EA2, and including an opening OPN that is in communication with the receiving space and is opened in the third direction DR3; and a cap assembly 200 covering at least a portion of the opening OPN. The cap assembly 200 may include a first current collecting portion CC1 at least a portion of which is disposed between the first terminal tab TA1 and the second terminal tab TA2, and the first terminal tab TA1 and the second terminal tab TA2 may be bent toward each other and may be electrically coupled to the first current collecting portion CC1.

In an embodiment, the first electrode assembly EA1 may include a first opposite terminal tab OTA1 protruding in a direction opposite to the first direction DR1, and the second electrode assembly EA2 may include a second opposite terminal tab OTA2 (see FIGS. 8 and 9) protruding in a direction opposite to the first direction DR1. The cap assembly 200 may include a second current collecting portion CC2 at least a portion of which is disposed between the first opposite terminal tab OTA1 and the second opposite terminal tab OTA2 (see FIGS. 8 and 9), and the first opposite terminal tab OTA1 and the second opposite terminal tab OTA2 (see FIGS. 8 and 9) may be bent toward each other and may be electrically coupled to the second current collecting portion CC2.

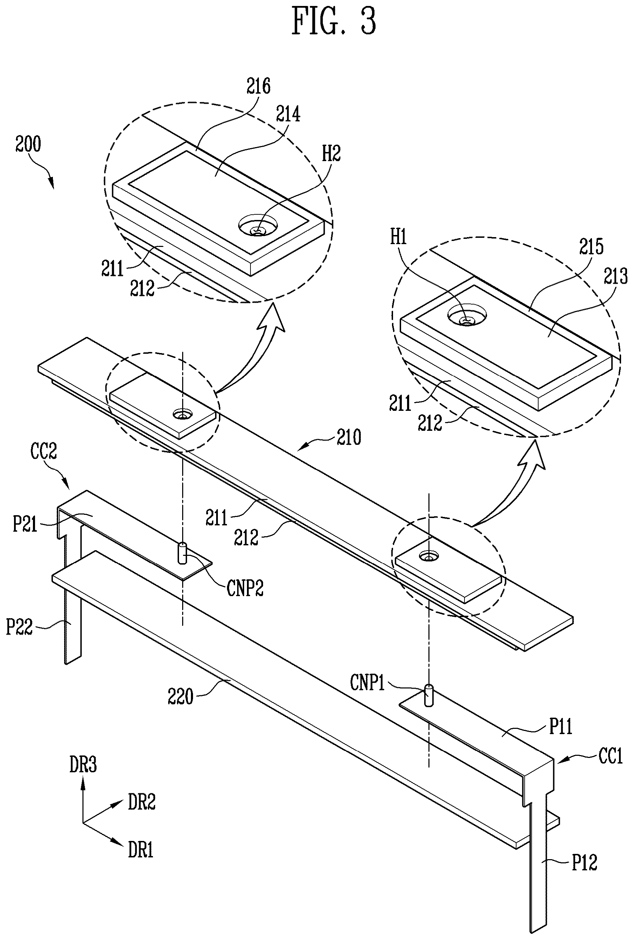

FIG. 3 is an exploded perspective view for explaining a cap assembly included in the battery cell of FIG. 1.

Referring to FIG. 3, the cap assembly 200 may include a first current collecting portion CC1, a second current collecting portion CC2, a first plate 210, and a second plate 220.

In an embodiment, the first current collecting portion CC1 may include a first-first portion P11 and a first-second portion P12. The first-first portion P11 may be a portion disposed on the first electrode assembly EA1 (see FIG. 1) and the second electrode assembly EA2 (see FIG. 1). The first-second portion P12 may be a portion extending from the first-first portion P11 in a direction opposite to the third direction DR3.

In an embodiment, the second current collecting portion CC2 may include a second-first portion P21 and a second-second portion P22. The second-first portion P21 may be a portion disposed on the first electrode assembly EA1 (see FIG. 1) and the second electrode assembly EA2 (see FIG. 1). The second-second portion P22 may be a portion extending from the second-first portion P21 in a direction opposite to the third direction DR3.

The first current collecting portion CC1 and the second current collecting portion CC2 may include a material having electrical conductivity. For example, each of the first current collecting portion CC1 and the second current collecting portion CC2 may include a metal, but the present disclosure is not limited thereto. In an embodiment, the first current collecting portion CC1 and the second current collecting portion CC2 may be spaced apart from each other.

The first plate 210 may cover at least a portion of the first current collecting portion CC1 (or the first-first portion P11) and at least a portion of the second current collecting portion CC2 (or the second-first portion P21). In an embodiment, the first plate 210 may be coupled to the opening OPN of the case 300 (see FIG. 1). In this case, the first plate 210 may shield the opening OPN (see FIG. 1). For example, the first plate 210 may have a shape corresponding to a shape of the opening OPN (see FIG. 1), but the present disclosure is not limited thereto.

In an embodiment, the first plate 210 may include a first hole H1 and a second hole H2 which respectively penetrate the first plate 210 in the third direction DR3 and are spaced apart from each other. In this case, the first current collecting portion CC1 (or the first-first portion P11) may include a first protrusion portion CNP1 protruding in the third direction DR3 and inserted into the first hole H1, and the second current collecting portion CC2 (or the second-first portion P21) may include a second protrusion portion CNP2 protruding in the third direction DR3 and inserted into the second hole H2.

In an embodiment, the first plate 210 may include a cover plate 211, a support plate 212, a first terminal portion 213, a second terminal portion 214, a first gasket 215, and a second gasket 216.

The cover plate 211 may be coupled to the opening OPN of the case 300 (see FIG. 1). In an embodiment, the cover plate 211 may have a shape corresponding to the opening OPN of the case 300 (see FIG. 1). For example, the cover plate 211 may have a plate shape such as a rectangle, but the present disclosure is not limited thereto.

The support plate 212 may be disposed under the cover plate 211. In an embodiment, the support plate 212 may cover at least a portion of the first current collecting portion CC1 and at least a portion of the second current collecting portion CC2. The support plate 212 may serve to prevent unnecessary electrical short circuits generated when each of the first current collecting portion CC1 and the second current collecting portion CC2 contacts other components having conductivity. In an embodiment, at least a portion or all of the support plate 212 may be omitted.

Each of the first terminal portion 213 and the second terminal portion 214 may protrude in the third direction DR3. The first terminal portion 213 and the second terminal portion 214 may be spaced apart from each other.

In an embodiment, each of the first terminal portion 213 and the second terminal portion 214 may include a material having electrical conductivity. In this case, the first terminal portion 213 may be electrically connected to the first current collecting portion CC1, and the second terminal portion 214 may be electrically connected to the second current collecting portion CC2.

For example, the first hole H1 may be a hole penetrating the first terminal portion 213, the cover plate 211, and the support plate 212 in the third direction DR3. The first protrusion portion CNP1 may be inserted into the first hole H1 and may be electrically coupled (e.g., welded, electrically coupled through a conductive member, or directly contacted) to the first terminal portion 213.

In another example, the first hole H1 may be a hole penetrating the cover plate 211 and the support plate 212 in the third direction DR3 but not penetrating the first terminal portion 213. In this case, at least a portion of the first terminal portion 213 may be exposed by the first hole H1. The first protrusion portion CNP1 may be inserted into the first hole H1 and may be electrically coupled to the exposed portion of the first terminal portion 213.

For example, the second hole H2 may be a hole penetrating the second terminal portion 214, the cover plate 211, and the support plate 212 in the third direction DR3. The second protrusion portion CNP2 may be inserted into the second hole H2 and may be electrically coupled (e.g., welded, electrically coupled through a conductive member, or directly contacted) to the second terminal portion 214.

In another example, the second hole H2 may be a hole penetrating the cover plate 211 and the support plate 212 in the third direction DR3 but not penetrating the second terminal portion 214. In this case, at least a portion of the second terminal portion 214 may be exposed by the second hole H2. The second protrusion portion CNP2 may be inserted into the second hole H2 and may be electrically coupled to the portion of the second terminal portion 214 exposed by the second hole H2.

In the foregoing embodiment, the first terminal portion 213 may function as a negative electrode terminal (or a positive electrode terminal) of the battery cell 1 (see FIG. 1), and the second terminal portion 214 may function as a positive electrode terminal (or a negative electrode terminal) of the battery cell 1 (see FIG. 1).

In another embodiment, each of the first terminal portion 213 and the second terminal portion 214 may include a material having no electrical conductivity. Alternatively, the first terminal portion 213 and the second terminal portion 214 may be omitted. In this case, the first protrusion portion CNP1 inserted into the first hole H1 and exposed may function as the negative electrode terminal (or the positive electrode terminal) of the battery cell 1 (see FIG. 1), and the second protrusion portion CNP2 inserted into the second hole H2 and exposed may function as the positive electrode terminal (or the negative electrode terminal) of the battery cell 1 (see FIG. 1).

Each of the first gasket 215 and the second gasket 216 may protrude in the third direction DR3. The first gasket 215 and the second gasket 216 may be spaced apart from each other.

Each of the first gasket 215 and the second gasket 216 may be coupled to the cover plate 211. In an embodiment, each of the first gasket 215 and the second gasket 216 may be coupled to the cover plate 211 without a separate coupling member. For example, each of the first gasket 215 and the second gasket 216 may be formed to be coupled to the cover plate 211 through an insert injection process. However, the present disclosure is not limited thereto. For example, each of the first gasket 215 and the second gasket 216 may also be coupled to the cover plate 211 through an adhesive member.

The first gasket 215 may receive the first terminal portion 213, and the second gasket 216 may receive the second terminal portion 214. In an embodiment, each of the first gasket 215 and the second gasket 216 may include a material having electrical insulation. In this case, the first gasket 215 and the second gasket 216 may serve to prevent unnecessary electrical short circuits generated when the first terminal portion 213 and the second terminal portion 214 contact other components having conductivity.

The second plate 220 may be disposed under the first-first portion P11 and the second-first portion P21. In this case, the first-first portion P11 and the second-first portion P21 may be interposed between the second plate 220 and the support plate 212. The second plate 220 may be disposed between the first-second portion P12 and the second-second portion P22. In an embodiment, the second plate 220 may include a material having electrical insulation. In this case, the second plate 220 may serve to prevent unnecessary electrical short circuits generated when the first-first portion P11 and the second-first portion P21 contact other components having conductivity.

In an embodiment, at least a portion or all of the second plate 220 may be omitted. When the second plate 220 is entirely omitted, the first-first portion P11 and the second-first portion P21 may be disposed under the support plate 212, or may be disposed between the cover plate 211 and the support plate 212. Alternatively, when both the second plate 220 and the support plate 212 are entirely omitted, the first-first portion P11 and the second-first portion P21 may be disposed under the cover plate 211.

FIG. 4 is a perspective view for explaining a state in which a portion of the first current collecting portion is disposed between the first terminal tab and the second terminal tab. FIG. 5 is a perspective view for explaining a state in which each of the first terminal tab and the second terminal tab is bent and electrically coupled to the first current collecting portion.

Referring to FIG. 4, the cap assembly 200 may be coupled to the electrode assembly array 100. In this case, at least a portion of the first current collecting portion CC1 (or at least a portion of the first-second portion P12) may be disposed between the first terminal tab TA1 and the second terminal tab TA2.

Referring to FIG. 5, the first terminal tab TA1 and the second terminal tab TA2 may be bent toward each other. In this case, the first terminal tab TA1 and the second terminal tab TA2 may be electrically coupled to the first current collecting portion CC1 (or the first-second portion P12). For example, a portion of the first terminal tab TA1 overlapping the first-second portion P12 and a portion of the second terminal tab TA2 overlapping the first-second portion P12 may be welded to the first-second portion P12.

As each of the first terminal tab TA1 and the second terminal tab TA2 is electrically coupled to the first-second portion P12, an electrical connection path may be formed from each of the first terminal tab TA1 and the second terminal tab TA2 to the first protrusion portion CNP1. As described above, the battery cell 1 (see FIG. 1) of the present disclosure may form a negative electrode terminal (or a positive electrode terminal) (e.g., the first terminal portion 213 (see FIG. 3), or the first protrusion portion CNP1 inserted into and exposed through the first hole H1 (see FIG. 3)) in a direction different from the protruding direction of the terminal tabs TA (i.e., the first direction DR1) of the electrode assemblies EA (see FIG. 1), that is, in the third direction DR3. Accordingly, design freedom and space efficiency of a battery pack including the battery cell 1 (see FIG. 1) may be improved.

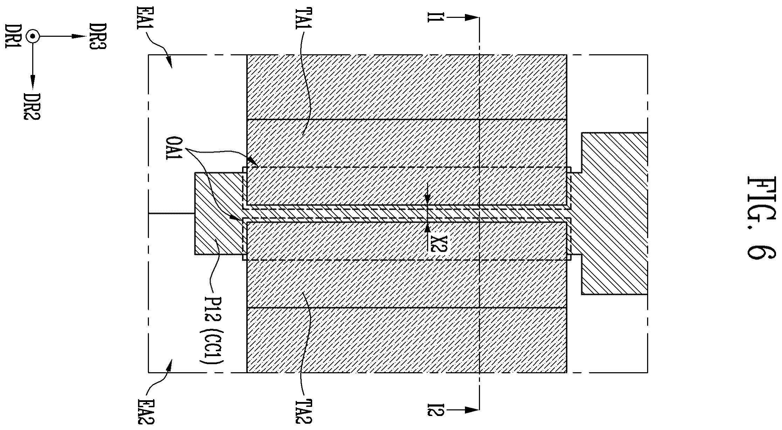

FIG. 6 is a view for explaining the first terminal tab and the second terminal tab electrically coupled to the first current collecting portion. FIG. 7 is a cross-sectional view taken along line I1-I2 of FIG. 6.

Referring to FIGS. 6 and 7, on a region overlapping the first current collecting portion CC1 (or the first-second portion P12) in the first direction DR1, the first terminal tab TA1 and the second terminal tab TA2 may be spaced apart from each other. Accordingly, interference between the first terminal tab TA1 and the second terminal tab TA2 during bending may be prevented, and thus, reliability of electrical coupling between the first current collecting portion CC1 (or the first-second portion P12) and the first terminal tab TA1 and the second terminal tab TA2 may be improved.

In an embodiment, between the first terminal tab TA1 and the second terminal tab TA2, a width X1 of the first-second portion P12 in the second direction DR2 may be greater than a shortest spaced distance X2 in the second direction DR2 between the first terminal tab TA1 and the second terminal tab TA2. Accordingly, an area of a region (hereinafter, "first overlapping region OA1") in which each of the first terminal tab TA1 and the second terminal tab TA2 overlaps the first-second portion P12 in a direction opposite to the first direction DR1 may be sufficiently secured. The first overlapping region OA1 may be a region in which a laser is irradiated in a welding process for electrically coupling each of the first terminal tab TA1 and the second terminal tab TA2 to the first-second portion P12. As a sufficient area of the first overlapping region OA1 is secured, a sufficient process margin may be secured when irradiating the laser in the welding process. Accordingly, manufacturing efficiency may be improved, and reliability of the battery cell 1 (see FIG. 1) may also be improved.

In an embodiment, in the first overlapping region OA1, a thickness Y1 of the first-second portion P12 in the first direction DR1 may be greater than each of a thickness Y2A of the first terminal tab TA1 in the first direction DR1 and a thickness Y2B of the second terminal tab TA2 in the first direction DR1. As described above, the first overlapping region OA1 may be a region in which a laser is irradiated in the welding process. The laser may be directly irradiated onto the first terminal tab TA1 and the second terminal tab TA2, which have relatively small thicknesses, and accordingly, each of the first terminal tab TA1 and the second terminal tab TA2 may be electrically coupled to the first-second portion P12. Thus, since the laser is directly irradiated onto the first terminal tab TA1 and the second terminal tab TA2, which have relatively small thicknesses and thus high thermal conductivity efficiency, welding efficiency may be improved, and the first terminal tab TA1 and the second terminal tab TA2 may be firmly coupled to the first-second portion P12.

In this case, since the thickness Y1 of the first-second portion P12 in the first direction DR1 is set to be relatively large as described above, the first-second portion P12 may serve as a barrier shielding the laser. Accordingly, based on the illustration of FIG. 7, components disposed under the first-second portion P12 (that is, components disposed in a direction opposite to the first direction DR1 relative to the first-second portion P12) may be prevented from being damaged by the laser. That is, reliability during the manufacturing process may be improved, and reliability of the battery cell 1 (see FIG. 1) may also be improved.

FIG. 8 is a perspective view for explaining a state in which a portion of the second current collecting portion is disposed between the first opposite terminal tab and the second opposite terminal tab. FIG. 9 is a perspective view for explaining a state in which each of the first opposite terminal tab and the second opposite terminal tab is bent and electrically coupled to the second current collecting portion.

Referring to FIG. 8, the cap assembly 200 may be coupled to the electrode assembly array 100. In this case, at least a portion of the second current collecting portion CC2 (or at least a portion of the second-second portion P22) may be disposed between the first opposite terminal tab OTA1 and the second opposite terminal tab OTA2.

Referring to FIG. 9, the first opposite terminal tab OTA1 and the second opposite terminal tab OTA2 may be bent toward each other. In this case, the first opposite terminal tab OTA1 and the second opposite terminal tab OTA2 may be electrically coupled to the second current collecting portion CC2 (or the second-second portion P22). For example, a portion of the first opposite terminal tab OTA1 overlapping the second-second portion P22 and a portion of the second opposite terminal tab OTA2 overlapping the second-second portion P22 may be welded to the second-second portion P22.

As each of the first opposite terminal tab OTA1 and the second opposite terminal tab OTA2 is electrically coupled to the second-second portion P22, an electrical connection path may be formed from each of the first opposite terminal tab OTA1 and the second opposite terminal tab OTA2 to the second protrusion portion CNP2. As described above, the battery cell 1 (see FIG. 1) of the present disclosure may form a positive electrode terminal (or a negative electrode terminal) (e.g., the second terminal portion 214 (see FIG. 3), or the second protrusion portion CNP2 inserted into and exposed through the second hole H2 (see FIG. 3)) in a direction different from the protruding direction of the opposite terminal tabs OTA (see FIG. 2) of the electrode assemblies EA (see FIG. 1), that is, in the third direction DR3. Accordingly, design freedom and space efficiency of a battery pack including the battery cell 1 (see FIG. 1) may be improved.

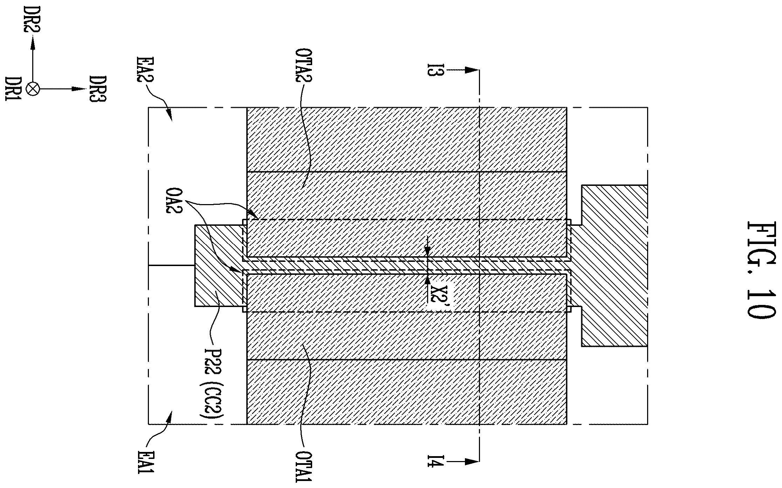

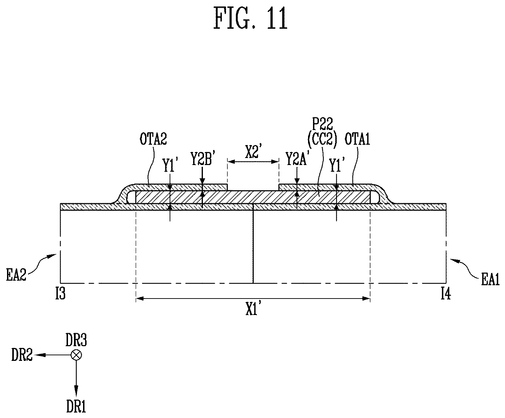

FIG. 10 is a view for explaining the first opposite terminal tab and the second opposite terminal tab electrically coupled to the second current collecting portion. FIG. 11 is a cross-sectional view taken along line I3-I4 of FIG. 10.

Referring to FIGS. 10 and 11, on a region overlapping the second current collecting portion CC2 (or the second-second portion P22) in a direction opposite to the first direction DR1, the first opposite terminal tab OTA1 and the second opposite terminal tab OTA2 may be spaced apart from each other. Accordingly, interference between the first opposite terminal tab OTA1 and the second opposite terminal tab OTA2 during bending may be prevented, and thus, reliability of electrical coupling between the second current collecting portion CC2 (or the second-second portion P22) and the first opposite terminal tab OTA1 and the second opposite terminal tab OTA2 may be improved.

In an embodiment, between the first opposite terminal tab OTA1 and the second opposite terminal tab OTA2, a width X1' of the second-second portion P22 in the second direction DR2 may be greater than a shortest spaced distance X2' in the second direction DR2 between the first opposite terminal tab OTA1 and the second opposite terminal tab OTA2. Accordingly, an area of a region (hereinafter, "second overlapping region OA2") in which each of the first opposite terminal tab OTA1 and the second opposite terminal tab OTA2 overlaps the second-second portion P22 in the first direction DR1 may be sufficiently secured. The second overlapping region OA2 may be a region in which a laser is irradiated in a welding process for electrically coupling each of the first opposite terminal tab OTA1 and the second opposite terminal tab OTA2 to the second-second portion P22. As a sufficient area of the second overlapping region OA2 is secured, a sufficient process margin may be ensured when irradiating the laser in the welding process. Accordingly, manufacturing efficiency may be improved, and reliability of the battery cell 1 (see FIG. 1) may also be improved.

In an embodiment, in the second overlapping region OA2, a thickness Y1' of the second-second portion P22 in the first direction DR1 may be greater than each of a thickness Y2A' of the first opposite terminal tab OTA1 in the first direction DR1 and a thickness Y2B' of the second opposite terminal tab OTA2 in the first direction DR1. As described above, the second overlapping region OA2 may be a region in which a laser is irradiated in the welding process. The laser may be directly irradiated onto the first opposite terminal tab OTA1 and the second opposite terminal tab OTA2, which have relatively small thicknesses, and accordingly, each of the first opposite terminal tab OTA1 and the second opposite terminal tab OTA2 may be electrically coupled to the second-second portion P22. Thus, since the laser is directly irradiated onto the first opposite terminal tab OTA1 and the second opposite terminal tab OTA2, which have relatively small thicknesses and thus high thermal conductivity efficiency, welding efficiency may be improved, and the first opposite terminal tab OTA1 and the second opposite terminal tab OTA2 may be firmly coupled to the second-second portion P22.

In this case, since the thickness Y1' of the second-second portion P22 in the first direction DR1 is set to be relatively large as described above, the second-second portion P22 may serve as a barrier shielding the laser. Accordingly, based on the illustration of FIG. 11, components disposed under the second-second portion P22 (that is, components disposed in the first direction DR1 relative to the second-second portion P22) may be prevented from being damaged by the laser. That is, reliability during the manufacturing process may be improved, and reliability of the battery cell 1 (see FIG. 1) may also be improved.

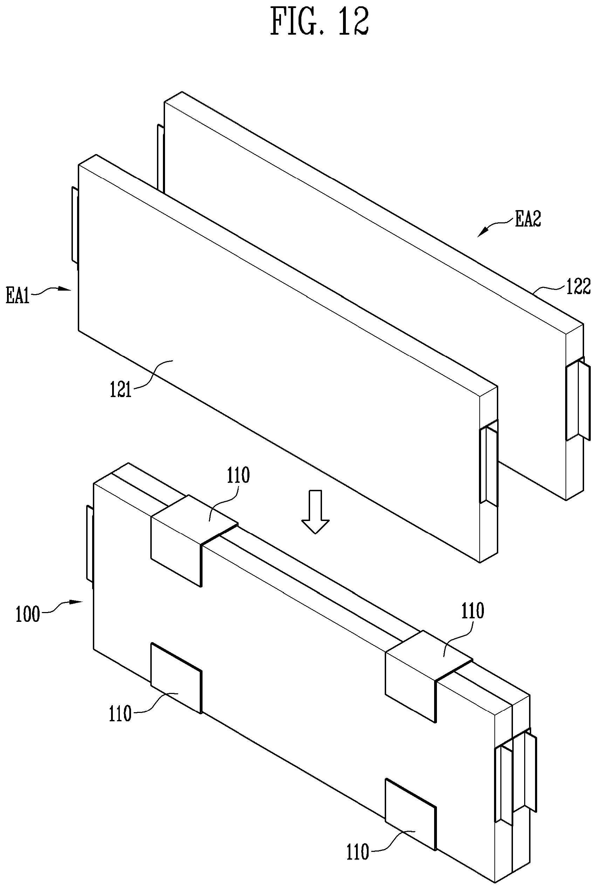

Hereinafter, a method of manufacturing a battery cell according to an embodiment of the present disclosure will be described with reference to FIGS. 12 to 14. Descriptions overlapping those described with reference to FIGS. 1 to 11 may be omitted, and omitted descriptions may be replaced with the foregoing explanations.

FIG. 12 is a view for explaining a method of forming an electrode assembly array.

Referring to FIG. 12, the electrode assembly array 100 may be formed. The electrode assembly array 100 may be formed by coupling the first electrode assembly EA1 and the second electrode assembly EA2 to each other. In an embodiment, the first electrode assembly EA1 may be provided in a state in which at least a portion thereof is covered by the first cover member 121, and the second electrode assembly EA2 may be provided in a state in which at least a portion thereof is covered by the second cover member 122. However, the present disclosure is not limited thereto, and at least a portion or all of the first and second cover members 121 and 122 may be omitted. The coupling between the first electrode assembly EA1 (or the first cover member 121 covering at least a portion of the first electrode assembly EA1) and the second electrode assembly EA2 (or the second cover member 122 covering at least a portion of the second electrode assembly EA2) may be performed, for example, by the insulating tape 110. However, the present disclosure is not limited thereto. The coupling between the first electrode assembly EA1 (or the first cover member 121 covering at least a portion of the first electrode assembly EA1) and the second electrode assembly EA2 (or the second cover member 122 covering at least a portion of the second electrode assembly EA2) may also be performed by an adhesive member disposed between the first electrode assembly EA1 and the second electrode assembly EA2.

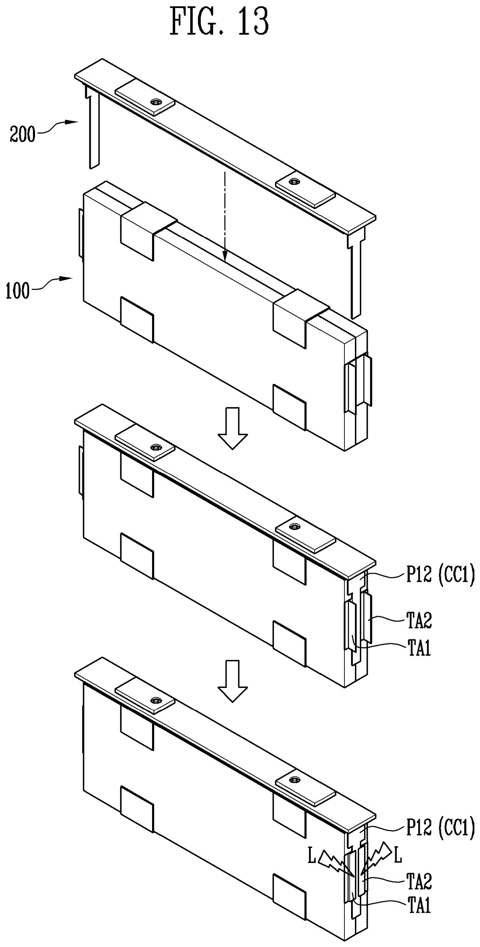

FIG. 13 is a view for explaining a method of electrically coupling a cap assembly to the electrode assembly array.

Referring to FIG. 13, the cap assembly 200 may be physically coupled to the electrode assembly array 100. Accordingly, at least a portion of the first current collecting portion CC1 (or at least a portion of the first-second portion P12) may be disposed between the first terminal tab TA1 and the second terminal tab TA2.

Thereafter, the first terminal tab TA1 and the second terminal tab TA2 may be bent toward each other. Here, each of the first terminal tab TA1 and the second terminal tab TA2 may physically contact at least a portion of the first current collecting portion CC1 (or at least a portion of the first-second portion P12).

Thereafter, a laser L may be irradiated onto the first overlapping region OA1, which is a region in which each of the first terminal tab TA1 and the second terminal tab TA2 overlaps the first-second portion P12. As the laser L is irradiated, each of the first terminal tab TA1 and the second terminal tab TA2 may be electrically coupled to the first-second portion P12.

As described above, a method of electrically coupling the cap assembly 200 to the electrode assembly array 100 based on the first terminal tab TA1, the second terminal tab TA2, and the first current collecting portion CC1 has been described. The foregoing description may likewise be applied to the first opposite terminal tab OTA1, the second opposite terminal tab OTA2, and the second current collecting portion CC2.

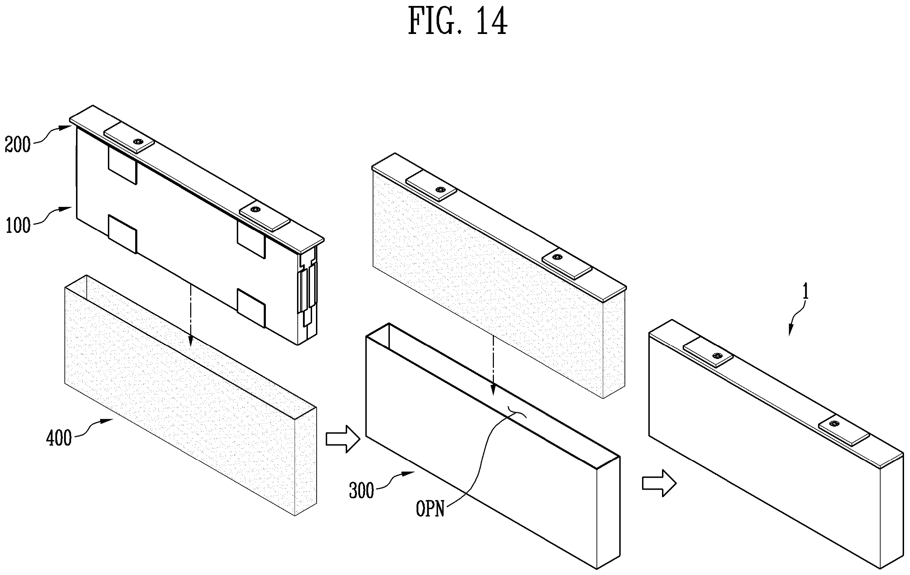

FIG. 14 is a view for explaining a method of manufacturing a battery cell using the electrode assembly array to which the cap assembly is coupled.

Referring to FIG. 14, the electrode assembly array 100 and the cap assembly 200, which are electrically coupled to each other, may be accommodated in a receiving space in the insulating member 400. Accordingly, the electrode assembly array 100 and the cap assembly 200, which are electrically coupled to each other, may be coupled to the insulating member 400.

Thereafter, the electrode assembly array 100 and the cap assembly 200, which are coupled to the insulating member 400, may be accommodated in the receiving space in the case 300. For example, the electrode assembly array 100 and the cap assembly 200, which are coupled to the insulating member 400, may be accommodated in the receiving space in the case 300 through the opening OPN of the case 300. Accordingly, the battery cell 1 may be formed.

The method of forming the insulating member 400 is not limited to the above-described embodiment. For example, after the electrode assembly array 100 and the cap assembly 200, which are electrically coupled to each other, are accommodated in the receiving space in the case 300 through the opening OPN of the case 300, an insulating material may be injected into the receiving space of the case 300 to form the insulating member 400.

It is understood by those skilled in the art that the plurality of exemplary embodiments described above are specific examples of the following aspects.

Aspect 1. A battery cell 1 comprising: a first electrode assembly EA1 including a first terminal tab TA1 protruding in a first direction DR1; a second electrode assembly EA2 which is adjacent to the first electrode assembly EA1 in a second direction DR2 intersecting the first direction DR1, and includes a second terminal tab TA2 protruding in the first direction DR1; a case 300 defining a receiving space that receives the first electrode assembly EA1 and the second electrode assembly EA2, and including an opening OPN that is in communication with the receiving space and is opened in a third direction DR3 perpendicular to each of the first direction DR1 and the second direction DR2; and a cap assembly 200 covering at least a portion of the opening OPN, wherein the cap assembly 200 includes a first current collecting portion CC1 at least a portion of which is disposed between the first terminal tab TA1 and the second terminal tab TA2, and wherein the first terminal tab TA1 and the second terminal tab TA2 are bent toward each other and are electrically coupled to the first current collecting portion CC1.

Aspect 2. The battery cell 1 according to aspect 1, wherein, on a region overlapping the first current collecting portion CC1 in the first direction DR1, the first terminal tab TA1 and the second terminal tab TA2 are spaced apart from each other.

Aspect 3. The battery cell 1 according to any one of the previous aspects, wherein the first current collecting portion CC1 includes: a first-first portion P11 disposed on the first electrode assembly EA1 and the second electrode assembly EA2; and a first-second portion P12 extending from the first-first portion P11 in a direction opposite to the third direction DR3, and wherein at least a portion of the first-second portion P12 is disposed between the first terminal tab TA1 and the second terminal tab TA2.

Aspect 4. The battery cell 1 according to aspect 3, wherein, between the first terminal tab TA1 and the second terminal tab TA2, a width X1 of the first-second portion P12 in the second direction DR2 is greater than a shortest spaced distance X2 in the second direction DR2 between the first terminal tab TA1 and the second terminal tab TA2.

Aspect 5. The battery cell 1 according to aspect 3 or aspect 4, wherein, in a first overlapping region OA1 in which each of the first terminal tab TA1 and the second terminal tab TA2 overlaps the first-second portion P12 in a direction opposite to the first direction DR1, a thickness Y1 of the first-second portion P12 in the first direction DR1 is greater than each of a thickness Y2A of the first terminal tab TA1 in the first direction DR1 and a thickness Y2B of the second terminal tab TA2 in the first direction DR1.

Aspect 6. The battery cell 1 according to any one of the previous aspects, wherein the first electrode assembly EA1 includes a first opposite terminal tab OTA1 protruding in a direction opposite to the first direction DR1, the second electrode assembly EA2 includes a second opposite terminal tab OTA2 protruding in a direction opposite to the first direction DR1, the cap assembly 200 includes a second current collecting portion CC2 at least a portion of which is disposed between the first opposite terminal tab OTA1 and the second opposite terminal tab OTA2, and wherein the first opposite terminal tab OTA1 and the second opposite terminal tab OTA2 are bent toward each other and are electrically coupled to the second current collecting portion CC2.

Aspect 7. The battery cell 1 according to aspect 6, wherein the first current collecting portion CC1 and the second current collecting portion CC2 are spaced apart from each other.

Aspect 8. The battery cell 1 according to aspect 6 or aspect 7, wherein, on a region overlapping the second current collecting portion CC2 in a direction opposite to the first direction DR1, the first opposite terminal tab OTA1 and the second opposite terminal tab OTA2 are spaced apart from each other.

Aspect 9. The battery cell 1 according to any one of aspect 6 to aspect 8, wherein the second current collecting portion CC2 includes: a second-first portion P21 disposed on the first electrode assembly EA1 and the second electrode assembly EA2; and a second-second portion P22 extending from the second-first portion P21 in a direction opposite to the third direction DR3, and wherein at least a portion of the second-second portion P22 is disposed between the first opposite terminal tab OTA1 and the second opposite terminal tab OTA2.

Aspect 10. The battery cell 1 according to aspect 9, wherein, between the first opposite terminal tab OTA1 and the second opposite terminal tab OTA2, a width X1' of the second-second portion P22 in the second direction DR2 is greater than a shortest spaced distance X2' in the second direction DR2 between the first opposite terminal tab OTA1 and the second opposite terminal tab OTA2.

Aspect 11. The battery cell 1 according to aspect 9 or aspect 10, wherein, in a second overlapping region OA2 in which each of the first opposite terminal tab OTA1 and the second opposite terminal tab OTA2 overlaps the second-second portion P22 in the first direction DR1, a thickness Y1' of the second-second portion P22 in the first direction DR1 is greater than each of a thickness Y2A' of the first opposite terminal tab OTA1 in the first direction DR1 and a thickness Y2B' of the second opposite terminal tab OTA2 in the first direction DR1.

Aspect 12. The battery cell 1 according to any one of aspect 6 to aspect 11, wherein the cap assembly 200 includes a first plate 210 covering at least a portion of the first current collecting portion CC1 and at least a portion of the second current collecting portion CC2.

Aspect 13. The battery cell 1 according to aspect 12, wherein the first plate 210 includes a first hole H1 and a second hole H2 which respectively penetrate the first plate 210 in the third direction DR3 and are spaced apart from each other, the first current collecting portion CC1 includes a first protrusion portion CNP1 protruding in the third direction DR3 and inserted into the first hole H1, and the second current collecting portion CC2 includes a second protrusion portion CNP2 protruding in the third direction DR3 and inserted into the second hole H2.

Aspect 14. The battery cell 1 according to aspect 12 or aspect 13, wherein the first plate 210 includes a first terminal portion 213 and a second terminal portion 214 which respectively protrude in the third direction DR3 and are spaced apart from each other.

Aspect 15. The battery cell 1 according to aspect 14, wherein the first current collecting portion CC1 is electrically connected to the first terminal portion 213, and the second current collecting portion CC2 is electrically connected to the second terminal portion 214.

The present disclosure may be embodied in various forms and is not limited to the above-described embodiments. Therefore, if a modified embodiment includes the constituent elements of the claims of the present disclosure, the modified embodiment should be regarded as falling within the scope of the present disclosure.

## Claims

1. A battery cell comprising:
a first electrode assembly including a first terminal tab protruding in a first direction;
a second electrode assembly which is adjacent to the first electrode assembly in a second direction intersecting the first direction, and includes a second terminal tab protruding in the first direction;
a case defining a receiving space that receives the first electrode assembly and the second electrode assembly, and including an opening that is in communication with the receiving space and is opened in a third direction perpendicular to each of the first direction and the second direction; and
a cap assembly covering at least a portion of the opening,
wherein the cap assembly includes a first current collecting portion at least a portion of which is disposed between the first terminal tab and the second terminal tab, and
wherein the first terminal tab and the second terminal tab are bent toward each other and are electrically coupled to the first current collecting portion.

2. The battery cell according to claim 1, wherein, on a region overlapping the first current collecting portion in the first direction, the first terminal tab and the second terminal tab are spaced apart from each other.

3. The battery cell according to any one of the previous claims, wherein the first current collecting portion includes:
a first-first portion disposed on the first electrode assembly and the second electrode assembly; and
a first-second portion extending from the first-first portion in a direction opposite to the third direction,
and wherein at least a portion of the first-second portion is disposed between the first terminal tab and the second terminal tab.

4. The battery cell according to claim 3, wherein, between the first terminal tab and the second terminal tab, a width of the first-second portion in the second direction is greater than a shortest spaced distance in the second direction between the first terminal tab and the second terminal tab.

5. The battery cell according to claim 3 or claim 4, wherein, in a first overlapping region in which each of the first terminal tab and the second terminal tab overlaps the first-second portion in a direction opposite to the first direction, a thickness of the first-second portion in the first direction is greater than each of a thickness of the first terminal tab in the first direction and a thickness of the second terminal tab in the first direction.

6. The battery cell according to any one of the previous claims,
wherein the first electrode assembly includes a first opposite terminal tab protruding in a direction opposite to the first direction,
the second electrode assembly includes a second opposite terminal tab protruding in a direction opposite to the first direction,
the cap assembly includes a second current collecting portion at least a portion of which is disposed between the first opposite terminal tab and the second opposite terminal tab,
and wherein the first opposite terminal tab and the second opposite terminal tab are bent toward each other and are electrically coupled to the second current collecting portion.

7. The battery cell according to claim 6, wherein the first current collecting portion and the second current collecting portion are spaced apart from each other.

8. The battery cell according to claim 6 or claim 7, wherein, on a region overlapping the second current collecting portion in a direction opposite to the first direction, the first opposite terminal tab and the second opposite terminal tab are spaced apart from each other.

9. The battery cell according to any one of claim 6 to claim 8, wherein the second current collecting portion includes:
a second-first portion disposed on the first electrode assembly and the second electrode assembly; and
a second-second portion extending from the second-first portion in a direction opposite to the third direction,
and wherein at least a portion of the second-second portion is disposed between the first opposite terminal tab and the second opposite terminal tab.

10. The battery cell according to claim 9, wherein, between the first opposite terminal tab and the second opposite terminal tab, a width of the second-second portion in the second direction is greater than a shortest spaced distance in the second direction between the first opposite terminal tab and the second opposite terminal tab.

11. The battery cell according to claim 9 or claim 10, wherein, in a second overlapping region in which each of the first opposite terminal tab and the second opposite terminal tab overlaps the second-second portion in the first direction, a thickness of the second-second portion in the first direction is greater than each of a thickness of the first opposite terminal tab in the first direction and a thickness of the second opposite terminal tab in the first direction.

12. The battery cell according to any one of claim 6 to claim 11, wherein the cap assembly includes a first plate covering at least a portion of the first current collecting portion and at least a portion of the second current collecting portion.

13. The battery cell according to claim 12, wherein the first plate includes a first hole and a second hole which respectively penetrate the first plate in the third direction and are spaced apart from each other,
the first current collecting portion includes a first protrusion portion protruding in the third direction and inserted into the first hole, and
the second current collecting portion includes a second protrusion portion protruding in the third direction and inserted into the second hole.

14. The battery cell according to claim 12 or claim 13, wherein the first plate includes a first terminal portion and a second terminal portion which respectively protrude in the third direction and are spaced apart from each other.

15. The battery cell according to claim 14, wherein the first current collecting portion is electrically connected to the first terminal portion, and the second current collecting portion is electrically connected to the second terminal portion.
